(19) **Europäisches Patentamt**

**European Patent Office**

**Office européen des brevets**

(11) **EP 1 160 901 A2**

(12) **EUROPÄISCHE PATENTANMELDUNG**

| | |
|---|---|
| (43) Veröffentlichungstag:<br>    **05.12.2001   Patentblatt 2001/49** | (51) Int Cl.⁷: **H01M 8/06**, H01M 8/10 |

(21) Anmeldenummer: **01112118.3**

(22) Anmeldetag: **17.05.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **20.05.2000  DE 10025033**

(71) Anmelder: **OMG AG & Co. KG**
    **63457 Hanau (DE)**

(72) Erfinder:
• **Gieshoff, Jürgen, Dr.**
  **63599 Biebergemünd (DE)**

• **Vollmer, Helga, Dr.**
  **63457 Hanau (DE)**
• **Diehl, Barbara**
  **65439 Flörsheim (DE)**
• **Lox, Egbert, Dr.**
  **63403 Hanau (DE)**
• **Kreuzer, Thomas, Dr.**
  **61184 Karben (DE)**

(74) Vertreter: **Herrmann, Reinhard**
    **OMG AG**
    **FI-PAT**
    **Postfach 1351**
    **63403 Hanau (DE)**

(54) **Verfahren zur elektrischen Energiegewinnung mit Hilfe einer Brennstoffzelle**

(57)     Die Erfindung betrifft ein Verfahren zur elektrischen Energiegewinnung mit Hilfe einer Brennstoffzelle durch Reformieren eines organischen Brennstoffs, Entfernen von Kohlenmonoxid aus dem Reformat und Umsetzen des im Reformat enthaltenen Wasserstoffs und von Sauerstoff in einer Brennstoffzelle unter Gewinnung elektrischer Energie. Das Verfahren ist dadurch gekennzeichnet, dass das Reformat zur Entfernung von Kohlenmonoxid in einem Bioreaktor behandelt wird, welcher einen thermophilen Mikroorganismenstamm enthält, der Kohlenmonoxid unter anaeroben Bedingungen zu Kohlendioxid und Wasserstoff metabolisiert.

Figur 1

**Beschreibung**

Die Erfindung betrifft ein Verfahren zur elektrischen Energiegewinnung mit Hilfe einer Brennstoffzelle.

Brennstoffzellen als Energiewandler werden in der letzten Zeit sowohl für mobile als auch für stationäre Anwendungen sehr intensiv untersucht. Brennstoffzellen ermöglichen die elektrochemische Umwandlung von Brenngasen und Sauerstoff zu den oxidierten Produkten und elektrischer Energie. Der Unterschied zu herkömmlichen chemischen Reaktionsführungen besteht darin, dass die Reduktion und Oxidation der Komponenten getrennt an zwei Elektroden durchgeführt werden. Die chemische Umsetzung der Reaktanden an den Elektroden wird dadurch möglich, dass die Ionenleitung über einen gasdichten Elektrolyten gewährleistet und der Elektronentransport nur über einen äußeren Stromkreis erfolgt.

Bislang sind als Brennstoffe im wesentlichen Wasserstoff und - mit deutlich schlechterem Wirkungsgrad - Methanol untersucht worden. Als Oxidationsmittel kommen Sauerstoff und Luft in Betracht. Der ungünstigere Wirkungsgrad der Direkt-Methanol-Brennstoffzelle ist begründet durch sehr stark adsorbierte Zwischenprodukte der Methanoloxidation an der Anode. Einen ähnlichen Effekt kann man bei einer Wasserstoff-Brennstoffzelle beobachten, wenn das Brenngas mit Kohlenmonoxid verunreinigt ist. Die Einbuße an Wirkungsgrad durch das Vorhandensein von Kohlenmonoxid ist dabei eine Funktion der CO-Konzentration und der Betriebstemperatur.

Die Reinheit des Wasserstoffs, insbesondere das Vorhandensein von Kohlenmonoxid, hat also auf den elektrischen Wirkungsgrad große Auswirkungen. Wasserstoff kann in höchster Reinheit direkt aus Wasser und elektrischer Energie gewonnen werden. Diese Gewinnung ist jedoch nur in bestimmten Fällen (zum Beispiel Solarenergie) sinnvoll und wird dort auch eingesetzt. Für technische Anwendungen der Brennstoffzelle wird der Wasserstoff aus fossilen Brennstoffen gewonnen. Typische Vertreter dieser Brennstoffe sind Erdgas, Methanol und aliphatische oder aromatische Kohlenwasserstoffe und Gemische davon wie zum Beispiel Benzin und Dieselöl. Prinzipiell ist es auch möglich, das wasserstoffhaltige Brenngas biologisch direkt als Synthesegas zu erzeugen und für die Nutzung in der Brennstoffzelle entsprechend aufzubereiten. Methanol kann auch zum Beispiel mit Hilfe methylotropher Hefen biologisch hergestellt werden.

Diese Energieträger lassen sich zum Beispiel durch Dampfreformierung zu einem Gasgemisch bestehend aus restlichem Brennstoff, Kohlendioxid, Kohlenmonoxid und Wasserstoff umsetzen. Nach dem Reformer enthält das Gas etwa 5 Vol.-% Kohlenmonoxid im Falle der Reformierung von Methan. Diese Konzentration ist sowohl für die zur Zeit aktuelle Niedertemperatur-Brennstoffzelle auf der Basis einer Polymerelektrolyt-Membran (PEMFC = Polymer Electrolyte Membran Fuel Cell) als auch für die phosphorsaure Brennstoffzelle (PAFC = Phosporic Acid Fuel Cell) ungeeignet.

Für die PAFC, die als Stationärsystem bei etwa 200° C arbeitet, ist eine Konzentration bis etwa 1 Vol.-% Kohlenmonoxid im Brenngas tolerierbar. Zur Einhaltung dieses Wertes kann das im Reformat enthaltene Kohlenmonoxid mit Wasser zu Kohlendioxid und Wasserstoff in Gegenwart von geeigneten Katalysatoren gemäß der folgenden Reaktionsgleichung umgesetzt werden:

$$CO + H_2O \rightleftarrows H_2 + CO_2 \qquad \Delta H > 0 \qquad (1)$$

Die Reaktion gemäß Reaktionsgleichung (1) wird im folgenden als Kohlenmonoxid-Konvertierung oder CO-Konvertierung bezeichnet. Im angelsächsischen Sprachgebrauch wird hierfür häufig der Begriff "water-gas-shift reaction" verwendet.

Die Kohlenmonoxid-Konvertierung wird gewöhnlich in zweistufigen Verfahren durchgeführt. In der ersten Verfahrensstufe wird bei Temperaturen zwischen 360 und 450° C eine sogenannte Hochtemperatur-CO-Konvertierung (High Temperature water-gas-Shift, HTS) an Fe/Cr-Katalysatoren durchgeführt. In der anschließenden zweiten Stufe wird bei Temperaturen zwischen 200 und 270° C eine Tieftemperatur-CO-Konvertierung (Low Temperature water-gas-Shift, LTS) an Cu/ZnO-Katalysatoren vorgenommen. Hinter der Tieftemperatur-Verfahrensstufe werden entsprechend dem thermischen Gleichgewicht Konzentrationen von weniger als 1 Vol.-% Kohlenmonoxid im Brenngas erhalten.

Die Membranbrennstoffzelle (PEMFC) als ein System mit einer Betriebstemperatur von etwa 80° C ist bezogen auf die CO-Konzentration wesentlich anspruchsvoller. Hier sind nur Werte im ppm-Bereich tolerierbar, da Kohlenmonoxid sehr starke adsorptive Wechselwirkungen mit den Platinteilchen der Elektrodenoberfläche eingehen. Die Gasreinigung geschieht zum Beispiel in stationären Anlagen über Druckwechseladsorption (DWA) des Kohlendioxids und anschließender Hydrierung des Kohlenmonoxids zu Methan oder durch selektive Oxidation des Kohlenmonoxids zu Kohlendioxid.

Der erste Reinigungsweg ist aufgrund der DWA mit hohem Energieaufwand bei gleichzeitig großem apparativen Aufwand verbunden. Die CO-Hydrierung führt dann zu einem Gas mit sehr niedrigen Restkonzentrationen an Kohlenmonoxid. Durch die Hydrierung wird jedoch auch die produzierte Menge an Wasserstoff vermindert.

Die direkte selektive Oxidation des Kohlenmonoxids ist zur Zeit der Weg, der insbesondere bei mobilen Anwendungen beschritten wird. Dabei wird gezielt eine kleine Menge Luft in den Brenngasstrom eindosiert. Der Luftsauerstoff reagiert mit dem Kohlenmonoxid zu Kohlendioxid. Bei dieser Verfahrensausgestaltung wird aber auch ein Teil des Nutzgases Wasserstoff oxidiert, so dass auch hier ein Wirkungsgradverlust zu beobachten ist.

Ein weiteres Verfahren zur Abtrennung von Kohlenmonoxid ist die Membrantechnik mit zu Beispiel Pd/Ag-Membranen. Die heute eingesetzten Membranen sind jedoch relativ teuer (begrenztes Palladium-Vorkommen) und erfordern einen hohen Energieeinsatz zur Erzeugung des erforderlichen Druckgefälles. Außerdem sind mechanische Probleme bislang noch ungelöst, die eine geringe Langzeitstabilität zur Folge haben können.

Es ist bekannt, dass die Kohlenmonoxid-Konvertierung gemäß Reaktionsgleichung (1) auch von bestimmten Mikroorganismen zur Energiegewinnung ausgenutzt wird (V.A. Svetlichny et. al.: "Carboxidothermus hydrogenoformans gen. nov., sp. nov., a CO-utilizing thermophilic anaerobic bacterium from hydrothermal environments of Kunashir Island", System. Appl. Microbiol. 14, 254-260 (1991) und M. Gerhardt et. al.: "Bacterial CO utilization with $H_2$ production by the strictly anaerobic lithoautotrophic thermophilic bacterium Carboxydothermus hydrogenus DSM 6008 isolated from hot swamp", FEMS Microbiology Letters 83 (1991) 267-272). Gemäß der DD 297 449 A5 kann dieser Organismus zur Entfernung von Kohlenmonoxid aus Synthesegas eingesetzt werden. Die DD 297 450 A5 beschreibt ein Verfahren zur mikrobiellen Herstellung von Wasserstoff und/oder Methan mit diesen Mikroorganismen. Carboxidothermus hydrogenoformans ist bei der Deutschen Sammlung von Mikroorganismen und Zellkulturen GmbH unter der Nummer DSM 6008 hinterlegt.

Aufgabe der vorliegenden Erfindung ist es, ein Verfahren zur elektrischen Energiegewinnung mit Hilfe einer Brennstoffzelle anzugeben bei dem der benötigte Wasserstoff durch Reformieren eines organischen Brennstoffs gewonnen wird und das im Reformat enthaltene Kohlenmonoxid durch einen energetisch effizienten Prozess zu Kohlendioxid und Wasserstoff umgesetzt wird.

Diese Aufgabe wird gelöst durch ein Verfahren zur elektrischen Energiegewinnung mit Hilfe einer Brennstoffzelle durch Reformieren eines organischen Brennstoffs, Entfernen von Kohlenmonoxid aus dem Reformat und Umsetzen des im Reformat enthaltenen Wasserstoffs und von Sauerstoff in einer Brennstoffzelle unter Gewinnung elektrischer Energie. Das Verfahren ist dadurch gekennzeichnet, dass das Reformat zur Entfernung von Kohlenmonoxid in einem Bioreaktor behandelt wird, welcher einen thermophilen Mikroorganismenstamm enthält, der Kohlenmonoxid unter anaeroben Bedingungen zu Kohlendioxid und Wasserstoff metabolisiert.

Besonders geeignet für das Verfahren ist die Verwendung von unlängst aus heißen Quellen isolierten, extrem thermophilen Bakterien. Die strikt anaeroben Bakterien des Stammes Carboxidothermus hydrogenoformans DSM 6008 sind erst seit kurzem bekannt. Sie vermögen in wäßrigem Milieu unter einer Atmosphäre von reinem Kohlenmonoxid zu wachsen. Sie bilden nach der Gleichung (1) neben ihrer Zellsubstanz ausschließlich Wasserstoff und Kohlendioxid als einzige Stoffwechselprodukte in equimolaren Mengen. Die optimalen Bedingungen für das Wachstum dieser Mikroorganismen liegen bei einer Temperatur zwischen 35 und 90° C und bei pH-Werten zwischen 5,0 und 8,0 sowie bei Drücken zwischen 1 und 10 bar vor. Verantwortlich für die Katalysierung der Kohlenmonoxid-Konvertierung durch Carboxidothermus hydrogenoformans ist das Enzym CO-Dehydrogenase.

Carboxidothermus hydrogenoformans ist ein obligater CO-Abbauer, das heißt ohne Kohlenmonoxid tritt kein Wachstum auf. Auch unter Atmosphären von $N_2 + CO_2$, $H_2 + CO_2$ und $CO + O_2$ konnte kein Wachstum festgestellt werden. Die Wachstums- bzw. die CO-Abbaurate kann durch Zugabe von Hefeextrakt, Pepton, Aminosäure- oder Peptidmischungen erhöht werden. Im Vergleich zu anderen anaeroben CO-abbauenden Organismen metabolisiert Carboxidothermus hydrogenoformans Kohlenmonoxid verhältnismäßig schnell. Es sind spezifische CO-Abbauraten von 100 μmol CO/ mg Biomasse · min bzw. 7,4 μmol CO/(ml Kulturlösung · h) genannt. Dabei wurden Zellkonzentrationen von 5 · $10^7$ bis 5 · $10^8$ Zellen/ml erreicht (Svetlichny et al. und DD 297 450 A5).

Für die Brenngaszusammensetzung nach einem Reformer treffen diese Randbedingungen zu, da kein Sauerstoff auf der Brenngasseite vorhanden ist. Gleichzeitig sind diese Mikroorganismen extrem thermophil, so dass Umsetzungen bei Temperaturen bis 90°C möglich sind. Die bevorzugten Wachstumsbedingungen liegen bei Temperaturen von 70 bis 72° C und bei pH 6,8 bis 7,0 vor.

Es gibt noch viele andere Mikroorganismen, die auf verschiedenen Stoffwechselwegen (nicht notwendigerweise anaerob und thermophil) in der Lage sind, CO abzubauen. Diese Mikroorganismen sind jedoch zumeist nicht in der Lage, die klassische Wasser-Gas-Shift-Reaktion ($CO + H_2O \rightarrow CO_2 + H_2$) durchzuführen, sondern bilden zum Teil unerwünschte Nebenprodukte wie zum Beispiel Methan. Bei der hier betrachteten Anwendung zur elektrischen Energieerzeugung in der Brennstoffzelle ist im Gas nach dem Reformer kein Sauerstoff enthalten, sodass nur strikt anaerobe und thermophile Organismen zum Ziel führen.

Der Bioreaktor zur Entfernung von Kohlenmonoxid aus dem Reformat kann sowohl in Verbindung mit einer Polymerelektrolyt-Brennstoffzelle als auch in Verbindung mit einer phosphorsauren Brennstoffzelle eingesetzt werden. Die Größe des notwendigen Bioreaktors richtet sich danach, ob das Reformat direkt biologisch gereinigt werden soll, oder ob der Bioreaktor erst hinter einer nicht-biologischen Verfahrensstufe zur Kohlenmonoxid-Konvertierung zur Feinreinigung eingesetzt wird. Diese nichtbiologische Verfahrensstufe kann aus einer Hochtemperatur- und einer Niedertemperaturstufe zur Kohlenmonoxid-Konvertierung bestehen. Es ist auch möglich, die Reaktionsraten in den verschiedenen Verfahrensstufen voneinander zu entkoppeln, indem das Gas vor oder nach der biologischen Reinigung in einem Gasspeicher zwischengespeichert wird.

Bei dem Bioreaktor kann es sich zum Beispiel um einen Rührkesselreaktor handeln. Bevorzugt wird der Mikroorganismus jedoch auf an sich bekannten Tägermaterialien fixiert und in Rieselfilmreaktoren oder Biofiltern eingesetzt. Zur Verbesserung der Wachstumsbedingungen kann der Mikroorganismus auf Hefeextrakt, Pepton oder einem anderen Proteine enthaltenden Substrat kultiviert werden. Alternativ hierzu kann statt des gesamten Mikroorganismus auch nur das Enzym CO-Dehydrogenase auf einem Trägermaterial fixiert werden, nachdem es zuvor isoliert wurde.

In einer bevorzugten Ausführungsform der Erfindung wird der Bioreaktor in den Brennstoffzellenstapel einer PEM-Brennstoffzellenanlage integriert. Dies kann zum Beispiel dadurch geschehen, dass die Mikroorganismen als ganze Zellen oder das isolierte Enzym CO-Dehydrogenase direkt auf den Gasverteilerstrukturen der Anoden fixiert wird.

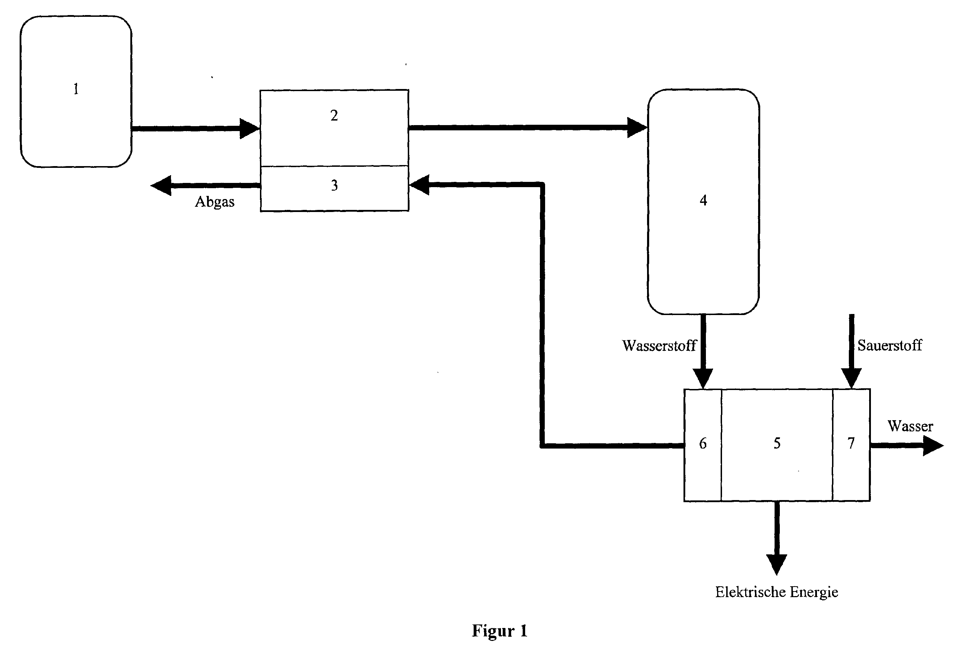

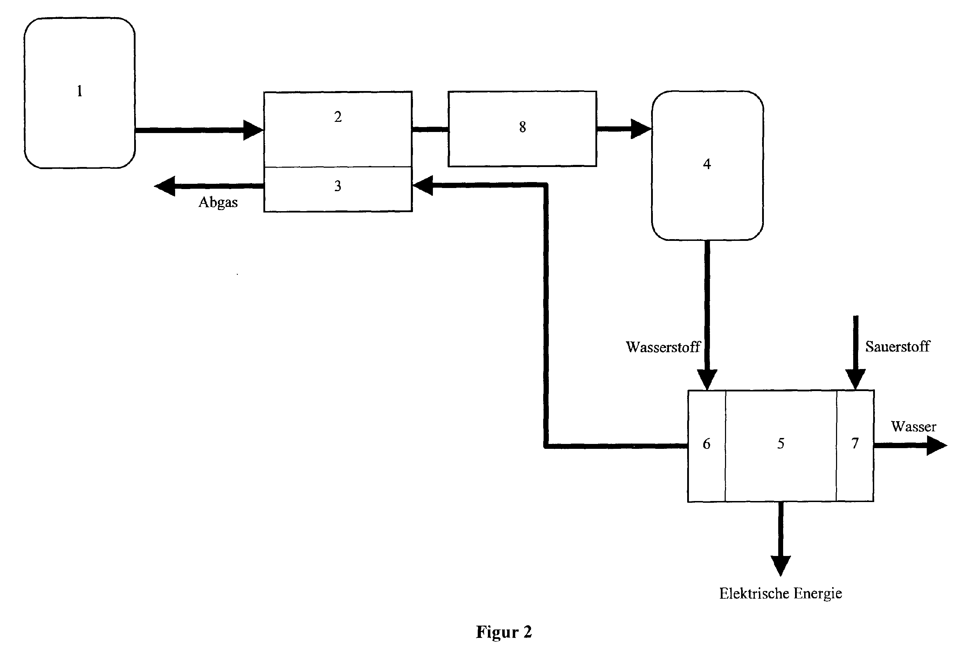

Zur weiteren Erläuterung der Erfindung dienen die Figuren 1 und 2. Es zeigen

Figur 1:   Prozessschema für die Gewinnung elektrischer Energie mit einer PEM-Brennstoffzelle unter Verwendung einer biologischen Reinigung des Reformatgases

Figur 2:   Prozessschema für die Gewinnung elektrischer Energie mit einer PEM-Brennstoffzelle mit einer kombinierten nicht-biologischen und einer biologischen Reinigungsstufe des Reformatgases

Figur 1 zeigt ein Prozessschema für die elektrische Energiegewinnung mit einer Polymerelektrolytmembran-Brennstoffzelle (PEM-Brennstoffzelle). Als Wasserstofflieferant werden Kohlenwasserstoffe eingesetzt, die von einem Tank (1) in einem Dampfreformer (2) zur Gewinnung eines Wasserstoff und Kohlenmonoxid enthaltenden Reformatgases behandelt werden. Das Reformatgas enthält beim Verlassen des Dampfreformers entsprechend dem thermischen Gleichgewicht bei der Austrittstemperatur etwa 5 Vol.-% Kohlenmonoxid. Zur Entfernung des Kohlenmonoxids wird das Reformatgas in einem Bioreaktor (4) behandelt. Das gereinigte Reformatgas wird dann in bekannter Weise in der Brennstoffzelle (5) zur Erzeugung von elektrischer Energie genutzt. Hierzu wird der Wasserstoff aus dem Bioreaktor der Anode (6) der Brennstoffzelle zugeleitet, während die Kathode (7) der Brennstoffzelle mit Sauerstoff (zum Beispiel aus Luft) versorgt wird. In der Brennstoffzelle nicht verbrauchter Wasserstoff wird zur Beheizung des Dampfreformers katalytisch verbrannt (3), bevor das Abgas an die Umwelt abgegeben wird.

Die folgenden Berechnungen dienen zur Abschätzung der benötigten Größe des Bioreaktors für diesen Fall. Es wird dabei angenommen, dass Erdgas als Energieträger eingesetzt wird. Analoge Betrachtungen gelten auch für andere Brenngase wie z. B. Methanol.

Die Brennstoffzelle habe eine elektrische Leistung von 10 kW und einen elektrischen Wirkungsgrad von 50%. Somit errechnet sich der notwendige Wasserstoffeingangsstrom zu 6270 l/h (= 20 kW unterer Heizwert).

Die Wasserstofferzeugung aus Erdgas (Methan als Rechengröße) gehorcht der Bruttoreaktionsgleichung:

$$CH_4 + 2\,H_2O \rightarrow 4\,H_2 + CO_2 \qquad (2)$$

Um eine Kohlenstoffabscheidung im Reformer zu unterbinden, wird der Wassergehalt auf ein Molverhältnis Wasser zu Methan = 3:1 erhöht.

In dem Produktgasgemisch finden sich also Wasserstoff, Kohlendioxid und Wasser im molaren Verhältnis von 4:1:1. Das den Dampfreformer verlassende Reformatgas enthält noch etwa 5 Vol.-% Kohlenmonoxid. Diese Menge entspricht einem Volumenstrom von 500 l/h, das heißt 22,3 Mol/h CO. Dieser Volumenstrom muss auf ca. 10 bis 100 ppm abgereichert werden. Damit ergibt sich für die Größe des Bioreaktors unter Berücksichtigung der bekannten metabolischen Daten von Carboxidothermus hydrogenoformans (spezifische CO-Abbaurate: 7,4 µmol CO/(ml Kulturlösung · h)) ein Volumen der Kulturlösung von 3 m³.

Figur 2 zeigt ein alternatives Prozessschema für die elektrische Energiegewinnung mit einer Polymerelektrolytmembran-Brennstoffzelle. In Figur 2 wird zur Entfernung des Kohlenmonoxids das Reformatgas zunächst über eine konventionelle Verfahrensstufe zur Kohlenmonoxid-Konvertierung (8) geleitet. Das diese Verfahrensstufe verlassende Reformatgas enthält nur noch etwa 0,5 Vol.-% Kohlenmonoxid, also nur etwa ein Zehntel der Menge wie gemäß Figur 1. Dementsprechend kann der Bioreaktor (4) für die biologische Feinreinigung auf 300 l Kulturlösung verringert werden.

Diese Abschätzungen zeigen, dass das vorgeschlagene Verfahren insbesondere für die stationäre Energiegewinnung mit Hilfe von Brennstoffzellen eingesetzt werden kann. Die Vorteile liegen einerseits im Vermeiden von Wasserstoffverlusten durch die notwendige Feinreinigung und andererseits auch - bei geeigneter Isolierung der Reaktionsbehälter- in der Verringerung des Gesamtenergiebedarfs.

**Patentansprüche**

1.  Verfahren zur elektrischen Energiegewinnung mit Hilfe einer Brennstoffzelle durch Reformieren eines organischen Brennstoffs, Entfernen von Kohlenmonoxid aus dem Reformat und Umsetzen des im Reformat enthaltenen Wasserstoffs und von Sauerstoff in einer Brennstoffzelle unter Gewinnung elektrischer Energie,
    **dadurch gekennzeichnet,**
    **dass** das Reformat zur Entfernung von Kohlenmonoxid in einem Bioreaktor behandelt wird, welcher einen thermophilen Mikroorganismenstamm enthält, der Kohlenmonoxid unter anaeroben Bedingungen zu Kohlendioxid und Wasserstoff metabolisiert.

2.  Verfahren nach Anspruch 1,
    **dadurch gekennzeichnet,**
    **dass** der Bioreaktor den Mikroorganismenstamm Carboxidothermus hydrogenoformans DSM 6008 enthält und mit Temperaturen zwischen 35 und 90° C und bei pH-Werten zwischen 5,0 und 8,0 sowie bei Drücken zwischen 1 und 10bar betrieben wird.

3.  Verfahren nach Anspruch 1,
    **dadurch gekennzeichnet,**
    **dass** als Brennstoffzelle eine Polymerelektrolyt-Brennstoffzelle oder eine Phosphorsäure-Brennstoffzelle eingesetzt wird.

4.  Verfahren nach Anspruch 1,
    **dadurch gekennzeichnet,**
    **dass** das Reformat vor Einleitung in den Bioreaktor in einer zusätzlichen, nicht-biologischen Verfahrensstufe zur Kohlenmonoxid-Konvertierung behandelt wird.

5.  Verfahren nach Anspruch 4,
    **dadurch gekennzeichnet,**
    **dass** die zusätzliche Verfahrensstufe eine Hochtemperatur- und eine Niedertemperaturstufe zur Kohlenmonoxid-Konvertierung enthält.

6.  Verfahren nach Anspruch 4,
    **dadurch gekennzeichnet,**
    **dass** vor oder nach der biologischen Verfahrensstufe ein Gasspeicher installiert ist, um die Reaktionsraten voneinander zu entkoppeln.

7.  Verfahren nach einem der vorstehenden Ansprüche,
    **dadurch gekennzeichnet,**
    **dass** der Mikroorganismenstamm auf Hefeextrakt, Pepton oder einem anderen Proteine enthaltenden Substrat kultiviert wird.

8.  Verfahren nach einem der Ansprüche 1 bis 5,
    **dadurch gekennzeichnet,**
    **dass** der Mikroorganismenstamm oder das Enzym CO-Dehydrogenase an bekannte Trägermaterialien fixiert im Reaktor vorliegt.

9.  Polymerelektroly-Brennstoffzelle enthaltend eine Polymerelektrolyt-Membran, deren eine Seite mit einem Anodenkatalysator und deren zweite Seite mit einem Kathodenkatalysator beschichtet ist, wobei beide Katalysatoren zur elektrischen Kontaktierung und zur Zu- und Abführung der Reaktionsmedien jeweils mit einer Gasverteilerstruktur belegt sind,
    **dadurch gekennzeichnet,**
    **dass** auf der Gasverteilerstruktur für die Anode die Mikroorganismen als ganze Zellen immobilisiert sind.

10. Verfahren nach Anspruch 9
    **dadurch gekennzeichnet,**
    **dass** auf der Gasverteilerstruktur für die Anode das Enzym CO-Dehydrogenase immobilisiert ist.

**Figur 1**

**Figur 2**